Europäisches Patentamt

European Patent Office

Office européen des brevets

(19)

(11) Veröffentlichungsnummer : **0 062 226 B2**

(12) # NEUE EUROPÄISCHE PATENTSCHRIFT

(45) Veröffentlichungstag der neuen Patentschrift :
26.08.92 Patentblatt 92/35

(51) Int. Cl.$^5$ : **C09D 5/02**

(21) Anmeldenummer : **82102381.9**

(22) Anmeldetag : **23.03.82**

(54) **Verfahren zur Herstellung von wasserverdünnbaren Bindemittellösungen unter Verwendung von Monoalkylglykolethern.**

(30) Priorität : **28.03.81 DE 3112429**

(43) Veröffentlichungstag der Anmeldung :
**13.10.82 Patentblatt 82/41**

(45) Bekanntmachung des Hinweises auf die
Patenterteilung :
**19.09.84 Patentblatt 84/38**

(45) Bekanntmachung des Hinweises auf die
Entscheidung über den Einspruch :
**26.08.92 Patentblatt 92/35**

(84) Benannte Vertragsstaaten :
**AT BE DE FR GB IT NL SE**

(56) Entgegenhaltungen :
**DE-A- 2 921 811
US-A- 3 446 764**

(56) Entgegenhaltungen :
**Kittel, Lehrbuch der Lacke und Beschichtungen, Verlag Colomb, Berlin 1976, Band 3, Seite 110
Farbe und Lack 81, 12 (1975-Pkt.3)
E. Browning, Toxicity and Metabolism of Industrial Solvents, Elsevier Publ. Co., 1965, Seiten 608 and 649
Mowilith-Handbuch, 5. Auflage 1970, Farbwerke Hochst AG, Seite 135**

(73) Patentinhaber : **BASF Aktiengesellschaft
Carl-Bosch-Strasse 38
W-6700 Ludwigshafen (DE)**

(72) Erfinder : **Nohe, Heinz, Dr.
Ruppertsberger Strasse 11
W-6701 Meckenheim (DE)**
Erfinder : **Neubert, Gerhard, Dr.
Panoramastrasse 11
W-6719 Battenberg (DE)**

EP 0 062 226 B2

Jouve, 18, rue Saint-Denis, 75001 PARIS

## Beschreibung

Die vorliegende Erfindung betrifft ein Verfahren zur Herstellung von wasserverdünnbaren, physikalisch trocknenden Bindemittellösungen für Beschichtungs- und Imprägnierstoffe unter Verwendung von Monoalkylglykolethern als Lösungsmittel.

Es ist bekannt, wassermischbare Monoalkylglykolether als Lösungsmittel für wasserverdünnbare Beschichtungsstoffe und Imprägnierstoffe einzusetzen. Beispielsweise werden in hitzehärtbaren oder oxidativ an der Luft trocknenden, wasserverdünnbaren Anstrichstoffen auf der Basis von Harzen mit neutralisierten sauren oder basischen Gruppen wassermischbare organische Lösungsmittel, wie vor allem 1-Butoxyethanol-2 (Butylglykol) und 1-Ethoxyethanol-2 (Ethylglykol) mitverwendet. Diese Lösungsmittel dienen zur Senkung der Viskosität der wasserhaltigen Stoffe durch Verbesserung der Solvatation des Bindemittels in der wäßrigen Phase, weiterhin zur besseren Benetzung des zu beschichtenden Untergrunds und der in den Stoffen enthaltenen Pigmente sowie zur Verbesserung des Verlaufs der Stoffe.

Aus Gründen der Wirtschaftlichkeit und Geringhaltung der Umweltbelastung durch Lösungsmittel wird angestrebt, den Anteil an orgarnischen Lösungsmitteln in diesen Stoffen so gering wie möglich zu halten. Der Senkung des Lösungsmittelanteils sind jedoch Grenzen gesetzt. Mit abnehmendem Gehalt dieser Lösungsmittel wird das Fließverhalten der wäßrigen Stoffe sowie deren Verarbeitungseigenschaften unbefriedigender, und schließlich kann das Bindemittel in der wäßrigen Phase unlöslich werden.

Weiterhin sollen derartige Lösungsmittel die An- und Durchtrocknung der wäßrigen Beschichtungen und Imprägnierungen bei Raumtemperatur beschleunigen. Trotz der hierzu erforderlichen relativ hohen Flüchtigkeit sollen sie aber im trocknenden Film immer in solchen Konzentrationen verbleiben, daß die Filmbildung nicht durch zu hohe Wasseranteile gestört wird und dadurch Filmschäden entstehen, wie beispielsweise Verlaufsstörungen, Glanzminderung, Abblättern, Riß- und Porenbildung mit dadurch bedingtem vermindertem Schutz für den Beschichtungsuntergrund.

Die üblichen bekannten Monoalkylglykolether erfüllen aber diese zum Teil sehr widersprüchlichen Eigenschaftsforderungen jeweils höchstens zu einem Teil in befriedigender Weise. Dies wird besonders deutlich bei physikalisch trocknenden Beschichtungs- und Imprägnierstoffen, wie sie beispielsweise in den deutschen Patentanmeldungen P 3 022 870.7 und P 3 022 824.1 beschrieben sind.

So zeichnet sich Butylglykol zwar durch besonders gute Solvatation für die dort beschriebenen neutralisierten Copolymerisate aus und ermöglicht auf diese Weise, wäßrige Beschichtungsstoffe mit besonders niedrigem Lösungsmittelgehalt herzustellen; es ist bei Raumtemperatur jedoch so wenig flüchtig, daß es übermäßig lange in der Beschichtung zurückbleibt und deren Filmhärte und Wasserfestigkeit über lange Zeit stark beeinträchtigt.

Schneller flüchtige übliche Monoalkylglykolether, wie beispielsweise Ethylglykol, solvatisieren die genannten wasserverdünnbaren Harze so wenig, daß verhältnismäßig hohe Anteile Lösungsmittel im Beschichtungsstoff mitverwendet werden müssen, um brauchbare Fließ- und Verarbeitungseigenschaften zu erhalten.

Die Kombination von Butylglykol mit schneller flüchtigen Alkoholen oder bekannten üblichen Monoalkylglykolethern führt zwar zu einem brauchbaren Kompromiß, läßt jedoch noch beträchtliche Wünsche offen, da durch derartige Kombinationen das Solvatationsvermögen des Butylglykols stark beeinträchtigt wird und z. T. Stoffe mit erhöhter Feuergefährlichkeit entstehen.

Aufgabe der vorliegenden Erfinduung ist es daher, Lösungsmittel für die Herstellung von wasserverdünnbaren physikalisch trocknenden Bindemitteln für Beschichtungs- und Imprägnierstoffe aufzuzeigen, die die oben geschilderten Nachteile nicht aufweisen.

Gegenstand der vorliegenden Erfindung ist ein Verfahren zur Herstellung von wasserverdünnbaren physikalisch trocknenden Bindemitellösungen für Beschichtungs-und Imprägnierstoffe unter Verwendung von Monoalkylglykolethern als Lösungsmittel, das dadurch gekennzeichnet ist, daß als Monoalkylglykolether verwendet werden, die mindestens 2 Gewichtsprozent 1-Isopropoxypropanol-2 enthalten.

1-Isopropoxypropanol-2 kann im Gemisch mit 2-Isopropoxypropanol-1, wobei noch geringe Mengen von bis zu 20 Gewichtsprozent an Umsetzungsprodukten von Isopropanol mit Propylenoxid im Molverhältnis 1 : 2, wie z. B. 1-Diisopropoxypropanol-2 und/oder 2-Diisopropoxypropanol-1 enthalten sein können, eingesetzt werden.

In einer besonderen Ausführungsform des erfindungsgemäßen Verfahrens können jedoch die Umsetzungsprodukte des Isopropanols mit 2 Molen Propylenoxid auch in höheren Anteilen eingesetzt werden.

1-Isopropoxypropanol-2 ist schneller flüchtig als Ethylglykol, bezogen auf seine relative Flüchtigkeit zeichnet es sich durch ein besonders gutes Solvatationsvermögen für viele wasserverdünnbare Harze aus, wie sie beispielsweise in den deutschen Patentanmeldungen P 3 022 870.7 und P 3 022 824.1 beschrieben sind. Es ermöglicht dadurch die Herstellung schneller an und durchtrocknender wasserhaltiger Beschichtungs- und Imprägnierstoffe mit geringem Lösungsmittelgehalt. Außerdem unterstutzt es, verglichen mit ähnlich flüchtigen Glykolethern, wie z, B, Ethylglykol, besser die Benetzung der Beschichtungsuntergründe sowie die Filmbildung und den Verlauf der Beschichtungen. Auf diese Weise wird auch der Korrosionsschutz der Beschichtungen besser.

Ein weiterer wesentlicher Vorteil besteht darin, daß sich durch seine Verwendung Harze mit verringertem Gehalt an Salzgruppen und daher höherer Hydrophobie und besserer Wasser- und Alkaliresistenz wasserverdünnbar und schnelltrocknend einstellen lassen.

Hinzu kommt der Vorteil, daß 1-Isopropoxypropanol-2 das Fließvrerhalten wasserverdünnbarer physikalisch trocknender Beschichtungsstoffe, verglichen mit ähnlich flüchtigen Glykolethern, besonders günstig beeinflußt, Extrem hohe Viskositäten, ein plötzlicher Viskositätsabfall und dann extrem niedrige Viskositäten, wie dies beim Verdünnen neutralisierter salzgruppen- und lösungsmittelarmer Harzlösungen mit Wässer besonders ausgeprägt ist, lassen sich weitgehend oder ganz unterdrücken.

Die erfindungsgemäße Verwendung von 1-Isopropoxypropanol-2 ermöglicht also, wasserverdünnbare physikalisch trocknende Beschichtungs- und Imprägnierstoffe herzustellen, die sich gleichzeitig durch besonders niedrigen Lösungsmittelgehalt, verbessertes Fließverhalten, schnelles Antrocknen, frühzeitige Hydrophobie der antrocknenden Schicht, schnelle Durchtrocknung, hohe Wasserquell- und Alkaliresistenz der durchgetrockneten Schichten, gute Untergrundbenetzung, guten Verlauf und hohe Haftfestigkeit auszeichnen.

1-Isopropoxypropanol-2 ist überdies biologisch leichter abbaubar und physiologisch unbedenklicher als die meisten anderen Monoalkylglykolether.

1-Isopropoxypropynol-2 eignet sich vielfach als alleiniges Hilfslösungsmittel für wasserhaltige physikalisch trocknende Beschichtungs- und Imprägnierstoffe. Es können aber auch weitere teilweise oder vollständig wassermischbare Lösungsmittel mitverwendet werden, wie z. B. n- oder sec.-Butanol, Isopropanol, Methoxypropanol und Butylglykol, wenn beispielsweise die Antrocknung der Beschichtung noch beschleunigt oder die Filmbildung und der Verlauf noch verbessert werden sollen.

Bevorzugt sind jedoch Gemische mit Dipropylenglykolmonoisopropylethern und insbesondere mit 2-Isopropoxypropanol-1, die als Nebenprodukte bei der Herstellung von 1-Isopropoxypropanol-2 erhalten werden. Vor allem die Kombinationen mit geringen Anteilen von etwa 2 bis 20% 2-Isopropoxypropanol-1 vermögen das Solvatationsvermögen für wasserverdünnbare Harze, den Verlauf und den Glanz wasserhaltiger Beschichtungsstoffe noch weiter zu verbessern, ohne die Verdunstungsgeschwindigkeit des Glykolethers wesentlich zu beeinträchtigen.

In besonderen Fällen, wenn beispielsweise der Lösungsmittelgehalt der Beschichtungsstoffe sehr niedrig eingestellt werden soll und gleichzeitig verzögerte Antrocknung sowie guter Verlauf und Glanz erwünscht sind, können die Dipropylenglykolmonoisopropylether auch in größeren Anteilen als Lösungsmittel eingesetzt werden. Dabei werden beispielsweise 1-Diisopropoxypropanol-2 und dessen Gemische mit geringen Anteilen von etwa bis zu 10 Gewichtsprozent der 2-Diisopropoxypropanole-1 bevorzugt. Diese Dipropylenglykolmonoisopropylether weisen besonders gutes Solvatationsvermögen für wasserverdünnbare Harze auf.- Ihre Verdunstungsgeschwindigkeit ist zwar niedrig, reicht jedoch auch für eine Trocknung bei Raumtemperatur aus, so daß besonders lösungsmittelarme Beschichtungsstoffe herstellbar sind.

Wasserverdünnbare physikalisch trocknende Beschichtungsstoffe, für die 1-Isopropoxypropanol-2 erfindungsgemäß verwendet wird, sind in erster Linie solche, deren Wasserverdünnbarkeit auf der Neutralisation basischer oder saurer Gruppen im Bindemittel beruht. Beispiele für derartige Bindemittel sind carboxylgruppenhaltige Polymerisate und Polykondensate, die mit Basen neutralisiert werden. Besonders bevorzugt ist die Verwendung für wasserverdünnbare, physikalisch trocknende Beschichtungsstoffe, wie sie in den beiden bereits oben zitierten deutschen Patentanmeldungen beschrieben sind. In diesen Fällen kommen die Beschriebenen Monoalkylglykolether in besonderem Maße zur Wirkung (vgl. Beispiele).

Für diese Anwendungsgebiete wird 1-Isopropoxypropanol-2, zweckmäßigerweise in Mengen zwischen 20 und 300, vorzugsweise 40 und 100 Gew.-%, bezogen auf das Salzgruppen enthaltende Bindemittel, eingesetzt.

Die Diisopropoxypropanole werden entsprechend ihrer langsameren Verdunstung dagegen im allgemeinen nur in Mengen zwischen etwa 10 und 40 Gew.-%, bezogen auf Bindemittel, angewendet.

Die aus den erfindungsgemäßen Bindemittellösungen hergestellten Beschichtungs- und Imprägnierstoffe können außerdem die in der Lacktechnologie üblichen Zusatzstoffe und Hilfsstoffe enthalten, wie z. B Pigmente. Füllstoffe, Weichmacher, Antiabsetzmittel, Verdickungsmittel, Entschäumer, Netzmittel und Gleitmittel.

Folgende Beispiele sollen den Gegenstand vorliegender Erfindung näher erläutern, ohne diese einzuschränken.

Die in den Beispielen angegebenen Teile bzw. Prozente beziehen sich, wenn nicht anders angegeben, auf das Gewicht.

Beispiel 1

100 Teile eines auf übliche Weise hergestellten Substanzpolymerisats aus 47 Teilen Styrol, 45 Teilen Isobutylacrylat, 8 Teilen Acrylsäure sowie 1,5 Teilen tert.-Butylperbenzoat als Initiator mit einem K-Wert nach DIN 53 726 von 28 (3%ig in Aceton) werden in 100 Teilen des in Tabelle 1 aufgeführten Glykolethers gelöst, mit den zu den Carboxylgruppen äquivalenten Mengen 25%igem wäßrigem Ammoniak neutralisiert und anschließend mit 135 Teilen deionisiertem Wasser verdünnt. Die Lösungen werden mit 25%igem Ammoniak auf pH-Wert 8,7 nachneutralisiert.

Zur Beurteilung der Filmbildung und Trocknungsgeschwindigkeit werden diese Klarlacke mit einem Filmziehlineal mit einer Spalthöhe von 0,10 mm auf eine Glasplatte aufgezogen. Die Ergebnisse sind in Tabelle 1 zusammengestellt.

Tabelle 1

|  | Beispiel Nr. 1 | Vergleichsbeispiele A | B |
|---|---|---|---|
| Glykolether | 1-Isopropoxypropanol-2 (rein) | Ethylglykol | Butylglykol |
| Verdunstungszahl (DIN 53 170, Ether = 1) | 36 | 43 | ca. 160 |
| Klarlacke: Trübung | klar | milchig weiß | klar |
| Viskosität (mPa · s) | ca. 4000 | 100 | ca. 4000 |
| Verdünnbarkeit mit überschüssigem Wasser | Lösung bleibt klar | Bindemittel flockt aus | Lösung bleibt klar |
| Filme (Trockenfilmdicke 0,016 mm) 1. Trocknungsdauer (Minuten): a) Oberfläche klebfrei | 10 | 11 | 45 |
| c) Wasserweißanlauf-beständig (60 Sekunden Wasser-einwirkung) | 10 | 11 | 45 |
| 2. Verlauf | gut | schlechte Benetzung, Krater | gut |

Die Ergebnisse der Tabelle 1 zeigen, daß 1-Isopropoxypropanol-2 besser solvatisierend wirkt als Ethylglykol und überdies die Herstellung von gleichzeitig gut benetzenden, gut verlaufenden und relativ schnell trocknenden wasserhaltigen Lacken erlaubt.

Beispiel 2

100 Teile des Harzes des Beispiels 1 werden in 50 Teilen der in Tabelle 2 aufgeführten Glykolether heiß gelöst und nach vollständiger Neutralisation mit Ammoniak analog zu Beispiel 1 mit Wasser auf 25%ige Polymerisatkonzentration verdünnt. Von diesen Klarlacken werden Filme auf Glas und Metallblech mit dem Filmziehlineal (Spalthöhe 0,2 mm) aufgezogen. Die Ergebnisse sind in Tabelle 2 zusammengefaßt. Alle diese Klarlacke lassen sich mit überschüssigem Wasser ohne Ausflockung des Bindemittels verdünnen. Alle Lacke benetzen Glas, Eisen, Aluminium und Zink gut und trocknen zu klaren Filmen mit gutem Verlauf. Die Klarlacke 2.3, 2.4, 2.5, 2.6 und 2.7 ergeben Lackfilme mit erhöhtem Oberflächenglanz.

4

Vergleichsbeispiel C

Wie in Beispiel 2; doch wird als Glykolether Ethylglykol eingesetzt. Bei Wasserzugabe zur neutralisierten Lösung wird das Bindemittel unlöslich und fällt aus. Das gleiche Ergebnis wird erhalten, wenn der Ethylglykolanteil auf 75 Teile erhöht wird.

Tabelle 2 (Glykolethergemische)

| | Klarlack Nr. | | | | | | |
| | 2.1 | 2.2 | 2.3 | 2.4 | 2.5 | 2.6 | 2.7 |
|---|---|---|---|---|---|---|---|
| Zusammensetzung der Gemische | | | | | | | |
| 1-Isopropoxypropanol-2 (IPP) | 96% | 93% | 87% | 74% | 80% | 85% | 40% |
| a) Nebenprodukte des IPP: | | | | | | | |
| 2-Isopropoxypropanol-1 | 4% | 4% | 13% | 22% | | 4% | |
| 1-Diisopropoxypropanol-2 | | 3% | | 3% | | 11% | 60% |
| 2-Diisopropoxypropanol-1 | | | | 1% | | | |
| b) Butylglykol | | | | | 20% | | |
| Verdunstungszahl (DIN 53 170, Ether = 1) | 38 | 42 | 44 | ca. 85 | 62 | 95 | ca. 300 |
| Aussehen der Klarlacke: Trübung | gering | gering | sehr gering | sehr gering | sehr gering | gering | sehr gering |
| Viskosität | ca. 150 | ca. 150 | ca. 200 | ca. 200 | ca. 200 | ca. 200 | ca. 200 |

Beispiel 3

100 Teile eines Substanzpolymerisats mit gegenüber dem Beispiel 1 erniedrigter Säurezahl aus 48,5 Teilen Styrol, 45 Teilen Isobutylacrylat und 6,5 Teilen Acrylsäure wird wie in Beispiel 1 in 100 Teilen Glykolether gelöst, mit Ammoniak neutralisiert und mit Wasser verdünnt. Als Glykolether dienen die Gemische der Tabelle 2. Es werden trübungsfreie Klarlacke erhalten, deren Lackfilme sich gegenüber denen des Beispiels 1 u. a. durch erhöhte Beständigkeit gegen langzeitige Einwirkung von Alkali, wie z. B. 1 n-Natronlauge auszeichnen.

Vergleichsbeispiel D

Wie in Beispiel 3; doch wird Ethylglykol anstelle der erfindungsgemäß zu verwendenden Glykolether eingesetzt. Bei der Zugabe von Wasser zu der neutralisierten Ethylglykollösung wird das Copolymerisat unlöslich und fällt aus.

Beispiel 4

100 Teile eines Substanzpolymerisats aus 50 Teilen Methylmethacrylat, 47 Teilen Isobutylacrylat, und 3 Teilen Acrylsäure mit einem K-Wert von 29 (3% in Aceton) werden in 75 Teilen Isopropoxypropanol-Gemisch 2.1 (vgl. Tabelle 2) heiß gelöst und wie in Beispiel 1 neutralisiert. Nach Verdünnen mit 225 Teilen deionisiertem Wasser erhält man bei einem pH-Wert von 8,7 einen nahezu trübungsfreien Klarlack.

Dieser Klarlack ist mit überschüssigem Wasser ohne Ausfällung des Copolymerisats beliebig verdünnbar. Er zeichnet sich durch sehr gute Benetzung der verschiedensten Substrate, wie Glas, Eisen, Aluminium, Zink und vielen Kunststoffen sowie sehr guten Verlauf und schnelle Trocknung aus.

Vergleichsbeispiel E

Wie in Beispiel 4; doch werden die 75 Teile Isopropylpropanol-Gemisch durch 75 Teile Ethylglykol ersetzt. Die neutralisierten Lösungen werden beim Verdünnen mit Wasser extrem hochviskos und milchig trübe. Sie sind nicht beliebig wasserverdünnbar.

## Patentansprüche

1. Verfahren zur Herstellung von wasserverdünnbaren physikalisch trocknenden Bindemitellösungen für Beschichtungs- und Imprägnierstoffe unter Verwendung von Monoalkylglykolethern als Lösungsmittel, dadurch gekennzeichnet, daß als Monoalkylglykolether solche verwendet werden, die mindestens 2 Gewichtsprozent 1-Isopropoxypropanol-2 enthalten.

## Revendications

1. Procédé de préparation de solutions de liants séchant physiquement, diluables à l'eau pour matières d'enduction et d'imprégnation, en utilisant, comme solvants, des éthers monoalkylglycoliques, caractérisé par le fait qu'on utilise, comme éther monoalkylglycolique, des éthers qui contiennent au moins 2% en poids de 1-isopropoxypropanol-2.

## Claims

1. A process for the preparation of a water-dilutable, physically drying binder solution for coating compositions and impregnants, using a monoalkyl glycol ether as the solvent, wherein the monoalkyl glycol ether used contains no less than 2 percent by weight of 1-isopropoxypropan-2-ol.